# EUROPÄISCHE PATENTSCHRIFT

(11) **EP 2 620 306 B1**
(45) Veröffentlichungstag und Bekanntmachung des Hinweises auf die Patenterteilung: **29.04.2020**
(21) Anmeldenummer: 13151045.5
(22) Anmeldetag: 11.01.2013
(51) Int. Cl.: B60J 5/04

(54) **Scharnier-Verstärkungseinrichtung für eine Fahrzeugtür**
Hinge reinforcement device for a vehicle door
Dispositif de renforcement de charnière pour une porte de véhicule

(30) Priorität: 24.01.2012 DE 102012201007
(43) Veröffentlichungstag der Anmeldung: 31.07.2013
(73) Patentinhaber: Bayerische Motoren Werke Aktiengesellschaft, 80809 München (DE)
(72) Erfinder: Lochbrunner, Peter, 81547 Muenchen (DE); Muehldorfer, Christian, 81377 Muenchen (DE)

(56) Entgegenhaltungen:
- EP-A2- 0 204 996
- DE-A1- 10 063 417
- DE-A1-102010 025 790
- US-A1- 2004 189 051
- US-B1- 6 550 846
- US-B2- 7 530 624

## Beschreibung

Die Erfindung betrifft eine Scharnier-Verstärkungseinrichtung für eine Fahrzeugtür, mit den im Oberbegriff des Patentanspruches 1 angegebenen Merkmalen. Derartige Scharnier-Verstärkungseinrichtungen sind z.B. aus der DE 100 63 417 A1, der US 6 550 846 B1 und der DE 10 2010 025790 A1 bekannt.

Eine derartige Scharnier-Verstärkungseinrichtung für eine Fahrzeugtür weist in der DE 100 63 417 A1 zur stabileren Abstützung der über ein oberes und ein unteres Scharnier gegenüber der Karosserie des Fahrzeugs schwenkbaren Fahrzeugtür eine großflächige Scharnierverstärkung auf, die an der inneren Stirnseite der Fahrzeugtür angeordnet ist und ein Versteifungsteil bildet, das sich in Höhenrichtung vom oberen Scharnier bis zum unteren Scharnier erstreckt. Die Scharnierverstärkung bildet somit für das obere und untere Scharnier eine obere und untere Scharnierverstärkung, die zusammen mit dem dazwischen befindlichen Versteifungsteil einstückig ausgebildet sind. Die großflächige Scharnierverstärkung liegt lediglich jeweils bereichsweise an der mit den Scharnieren versehenen Stirnseite und am Türinnenblech an, wodurch die Scharnierverstärkung nur an diesen Anlagebereichen direkt mit der Stirnseite und dem Türinnenblech der Fahrzeugtür verbunden sein kann. Zur Befestigung der großflächigen Scharnierverstärkung an der Fahrzeugtür ist angegeben, dass die Scharnierverstärkung randseitig mit dem Scharnierträger (der durch die mit den Scharnieren versehene Stirnseite der Fahrzeugtür gebildet ist) durch eine Stanznietung, Schweißung und/oder Klebung verbunden ist und somit in flächig an der Stirnseite der Fahrzeugtür anliegenden Bereichen nicht mit der Fahrzeugtür verbunden sein dürfte. Die großflächige Scharnierverstärkung ist über mehrfach abgewinkelte, jeweils etwa senkrechte Flächenbereiche seitlich am Türinnenblech befestigt. Durch die etwa senkrechten, zueinander abgewinkelten Flächenbereiche und Hohlräume zwischen der großflächigen Scharnierverstärkung und dem Türinnenblech ist die großflächige Scharnierverstärkung nachgiebig am Türinnenblech und an der mit den Scharnieren versehenen Stirnseite der Fahrzeugtür befestigt. Es sind deshalb zu der großflächigen Scharnierverstärkung zwei weitere Scharnierverstärkungsplatten vorgesehen, die das obere und untere, jeweils an der Fahrzeugtür befestigte Scharnierteil des oberen und unteren Scharniers zusätzlich stützen.

Der Erfindung liegt die Aufgabe zu Grunde, eine Scharnier-Verstärkungseinrichtung für eine Fahrzeugtür mit den Merkmalen im Oberbegriff des Patentanspruches 1 anzugeben, die mit einfachen Mitteln eine wesentliche Versteifung der Fahrzeugtür im Bereich der Scharniere der Fahrzeugtür bewirkt.

Diese Aufgabe ist durch die Merkmale im Patentanspruch 1 gelöst. Vorteilhafte Ausgestaltungen der Erfindung sind den Unteransprüchen entnehmbar.

Die erfindungsgemäße Scharnier-Verstärkungseinrichtung weist zur Verstärkung des oberen und unteren Scharnierbereichs der über ein oberes und unteres Scharnier gegenüber der Karosserie des Fahrzeugs schwenkbaren Fahrzeugtür eine obere und untere Scharnierverstärkung und dazwischen ein Versteifungsteil auf, die jeweils von innen zumindest bereichsweise zumindest mittelbar mit dem Türinnenblech verbunden und jeweils durch wenigstens ein Bauteil separat gefertigt sind. Zumindest nach der Fertigung der Fahrzeugtür sind die obere und untere Scharnierverstärkung über ein beliebiges Verbindungsverfahren, beispielsweise durch Schweißen, Nieten, Kleben, Verformen oder Verschrauben, lösbar oder unlösbar auch mit dem Versteifungsteil verbunden, das an der oberen und unteren Scharnierverstärkung eine wesentliche Stützwirkung bewirkt. Durch eine zunächst separate Fertigung der oberen und unteren Scharnierverstärkung und des Versteifungsteiles können diese Bauteile weitgehend frei gestaltet und an die zu erwartenden Erfordernisse, insbesondere an die zu erwartenden Belastungen, angepasst werden. Die obere und/oder untere Scharnierverstärkung weisen jeweils einen Hauptflächenbereich in Türlängs- und Türquerrichtung und eine Abwinkelung auf, die einen in Türhoch- und Türlängsrichtung befindlichen Stützflächenbereich bildet, der zumindest mittelbar mit dem Türinnenblech der Fahrzeugtür fest oder lösbar verbunden ist. Die obere und/oder untere Scharnierverstärkung können dadurch erhebliche Kräfte und/oder Dreh- und/oder Biegemomente aufnehmen, die aus Kräften resultieren, die etwa in der Ebene des betreffenden Hauptflächenbereiches wirken. Der etwa in Türlängs- und Türquerrichtung befindliche Hauptflächenbereich der oberen bzw. unteren Scharnierabstützung kann sich dabei nicht oder nicht wesentlich verformen, da der Hauptflächenbereich in seiner Fläche hohe Kräfte und Momente aufnehmen kann und die den Hauptflächenbereich bildende obere bzw. untere Scharnierabstützung am Türinnenblech an mehrere Stellen befestigt und mit dem Versteifungsteil verbunden ist, das seinerseits am Türinnenblech stabil befestigt ist. Bei einer beispielsweise über einen Türgriff oder beim Ergreifen der Fahrzeugtür an der Fahrzeugtür bewirkten Kraft bzw. bei einem daraus resultierenden Drehmoment, die bzw. das beispielsweise beim Überdrücken der maximal geöffneten und an einem Anschlag anliegenden Fahrzeugtür in Öffnungsrichtung oder beim schwungvollen Schließen der Fahrzeugtür einen jeweils größeren Wert aufweisen kann, stützt sich die über das obere und/oder untere Scharnier in die Fahrzeugtür und insbesondere in die betreffende Scharnierverstärkung und das Versteifungsteil eingeleitete Kraft bzw. das daraus resultierende Drehmoment an mehreren Stellen am Türinnenblech und über die mehrfachen Befestigungsstellen der oberen und unteren Scharnierverstärkung und des Verstärkungsteiles direkt oder zumindest mittelbar ab, so dass dabei die Fahrzeugtür gleichmäßiger belastet bzw. lokal nicht überbelastet und nicht oder wesentlich weniger verformt wird.

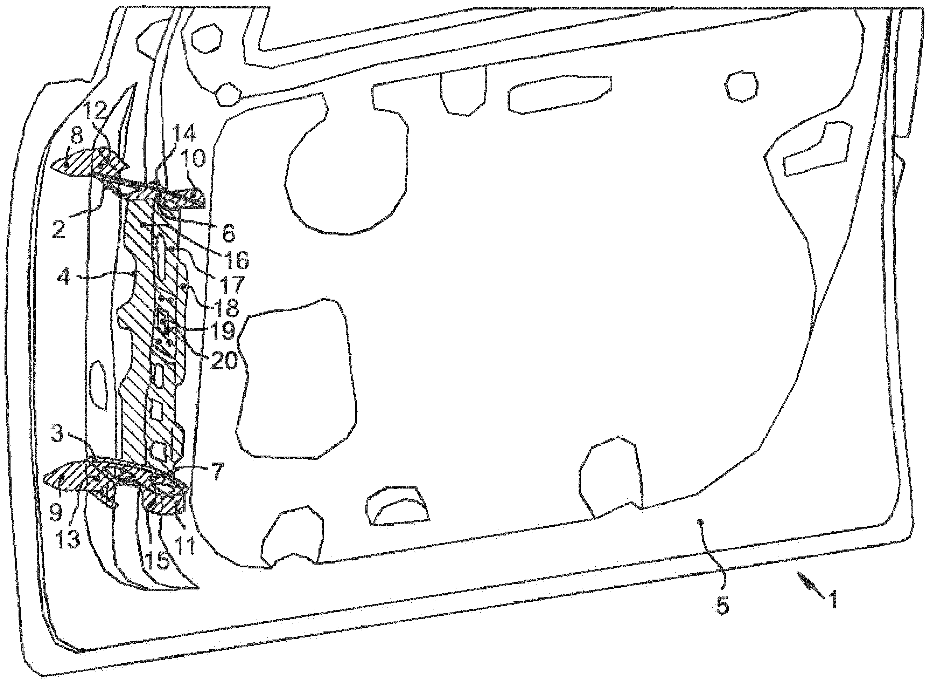

Ein Ausführungsbeispiel der Erfindung wird anhand einer Zeichnung mit einer einzigen Figur näher erläutert, die eine perspektivische Ansicht auf das Türinnenblech einer seitlichen Tür eines Kraftfahrzeugs darstellt.

Die in der einzigen Figur vereinfacht dargestellte Scharnier-Verstärkungseinrichtung ist zur Verstärkung des oberen und unteren Scharnierbereichs einer über ein oberes und unteres, jeweils nicht dargestelltes Scharnier gegenüber der Karosserie des Fahrzeugs schwenkbaren Fahrzeugtür 1 vorgesehen und weist hierfür eine obere 2 und untere Scharnierverstärkung 3 und dazwischen ein Versteifungsteil 4 auf, die jeweils von innen zumindest bereichsweise zumindest mittelbar mit einem Türinnenblech 5 verbunden und jeweils durch wenigstens ein Bauteil 2, 3, 4 separat gefertigt sind. Zumindest nach der Fertigung der Fahrzeugtür 1 sind die obere 2 und untere Scharnierverstärkung 3 über ein beliebiges Verbindungsverfahren, beispielsweise durch Schweißen, Nieten, Kleben, Verformen oder Verschrauben, lösbar oder unlösbar auch mit dem Versteifungsteil 4 fest verbunden, das an der oberen 2 und unteren Scharnierverstärkung 3 eine wesentliche Stützwirkung bewirkt.

Durch eine zunächst separate Fertigung der oberen 2 und unteren Scharnierverstärkung 3 und des Versteifungsteiles 4 können diese Bauteile weitgehend frei gestaltet und an die zu erwartenden Erfordernisse, insbesondere an die zu erwartenden Belastungen, angepasst sein. Die obere 2 und/oder untere Scharnierverstärkung 3 weisen jeweils einen Hauptflächenbereich 6, 7 in Türlängs- und Türquerrichtung und eine Abwinkelung 10, 11 auf, die in einem von dem Versteifungsteil 4 entfernten hinteren Bereich einen in Türhoch- und Türlängsrichtung befindlichen Stützflächenbereich bildet, der zumindest mittelbar mit dem Türinnenblech 5 der Fahrzeugtür 1 fest oder lösbar verbunden ist. Der etwa in Türlängs- und Türquerrichtung befindliche Hauptflächenbereich 6, 7 der oberen 2 und/oder unteren Scharnierverstärkung 3 weist außerdem in einem vorderen Bereich jeweils eine Abwinkelung 8, 9 mit einem Stützflächenbereich im Wesentlichen in Türhoch- und Türlängsrichtung der unmittelbar oder zumindest mittelbar mit dem Türinnenblech 5 der Fahrzeugtür 1 fest oder lösbar verbunden ist. Außerdem weisen bei dem Ausführungsbeispiel die Hauptflächenbereiche 6, 7 der oberen 2 und/oder unteren Scharnierverstärkung 3 in einem vorderen und hinteren Bereich jeweils eine weitere Abwinkelung 12, 14 bzw. 13, 15 mit einem im Wesentlichen in Türhoch- und Türquerrichtung befindlichen Flächenbereich auf, der unmittelbar oder zumindest mittelbar mit dem Türinnenblech 5 der Fahrzeugtür 1 fest oder lösbar verbunden ist.

Die jeweils benachbarten Abwinkelungen 8, 12 bzw. 9, 13 bzw. 10, 14 bzw. 11, 15 grenzen in einem etwa rechten Winkel aneinander an und sind miteinander und mit der betreffenden Stützfläche 6 bzw. 7 der oberen 2 bzw. unteren Scharnierverstärkung 3 einstückig verbunden und durch entsprechende Abbiegungen aus einem beispielsweise ebenen, einteiligen Blechteil geformt. Derartige Mehrfachabwinkelungen an der oberen 2 und unteren Scharnierverstärkung 3 können beispielsweise durch wenigstens einen Pressvorgang in einem Pressformwerkzeug geformt werden.

Das bei dem Ausführungsbeispiel mittels einem Biegestanzwerkzeug einteilig aus einem Blechteil gefertigte und dabei geformte Versteifungsteil 4 weist bei dem Ausführungsbeispiel im Wesentlichen drei zueinander Z-förmig abgewinkelte Flächenbereiche 16, 17, 18 auf, von denen jeder Flächenbereich mit einem zugeordneten Gegenflächenbereich von zueinander abgewinkelten Gegenflächenbereichen des Türinnenblechs 5 der Fahrzeugtür 1 unmittelbar oder mittelbar fest oder lösbar verbunden ist.

In einem mit den nicht dargestellten Scharnieren versehenen Stirnbereich der Fahrzeugtür 1 ist eine etwa in Türlängsrichtung ausgebildete Durchtrittsöffnung 19 für ein an der Karosserie des Fahrzeugs angelenktes, nicht dargestelltes Türbremselement vorgesehen, das durch eine mit der Durchtrittsöffnung 19 zumindest bereichsweise fluchtende Durchgangsöffnung 20 im Versteifungsteil 4 hindurch mit einer an dem Türinnenblech 5 der Fahrzeugtür 1 befestigten, nicht dargestellten Türbremse zusammen wirkt. Die Türbremse ist bei dem Ausführungsbeispiel in einem ebenfalls nicht dargestellten, zu der Durchgangsöffnung 20 offenen Türbremsgehäuse angeordnet, das über nicht dargestellte Befestigungsschrauben, die beispielsweise in durch schwarze Punkte mit einem weißen Mittelpunkt dargestellte Gewinde im Versteifungsteil 4 oder im Türinnenblech 5 einschraubbar sind, an dem Versteifungsteil 4 direkt oder mittelbar anliegend befestigt ist.

Bei dem Ausführungsbeispiel ist das nicht dargestellte Türbremselement durch eine Haltezunge gebildet, die beim Öffnen und Schließen der Fahrzeugtür selbsttätig gegenüber der Türbremse im Türbremsgehäuse an der Fahrzeugtür 1 bzw. bei dem Ausführungsbeispiel an dem Versteifungsteil 4 verstellbar ist und durch ein zusammen Wirken mit einer Rasteinrichtung im Türbremsgehäuse zumindest in einer Winkelstellung der Fahrzeugtür 1 die Fahrzeugtür 1 kraftschlüssig arretiert.

Bei dem Ausführungsbeispiel sind die obere 2 und untere Scharnierverstärkung 3 sowie das Versteifungsteil jeweils an zumindest einer Stelle punkt-, linien- oder flächenförmig mit dem Türinnenblech 5 der Fahrzeugtür 1 verschweißt und/oder verklebt und/oder vernietet unlösbar und/oder über ein lösbares Verbindungsmittel lösbar verbunden.

Die Erfindung ist selbstverständlich von dem einzigen Ausführungsbeispiel abweichend ausführbar. Die Scharnier-Verstärkungseinrichtung für eine über ein oberes und ein unteres Scharnier an der Karosserie eines Fahrzeugs schwenkbare Fahrzeugtür weist jeweils eine zumindest mittelbar mit der Innenseite eines Türinnenblechs der Fahrzeugtür verbundene oberen Scharnierverstärkung und eine untere Scharnierverstärkung auf, die über ein Versteifungsteil verbunden sind, das zumindest bereichsweise zumindest mittelbar an dem Türinnenblech befestigt ist. Die obere und untere Scharnierverstärkung und das Versteifungsteil sind jeweils durch wenigstens ein separat gefertigtes Bauteil gebildet, die zumindest nach der Fertigung der Fahrzeugtür fest miteinander verbunden sind. Die obere und/oder untere Scharnierverstärkung weisen jeweils einen Hauptflächenbereich in Türlängs- und Türquerrichtung und eine Abwinkelung auf mit einem in Türhoch- und Türlängsrichtung befindlichen Stützflächenbereich auf, der zumindest mittelbar mit dem Türinnenblech der Fahrzeugtür fest oder lösbar verbunden ist. Der etwa in Türlängs- und Türquerrichtung befindliche Hauptflächenbereich der oberen und/oder unteren Scharnierverstärkung kann auch beispielsweise in einem vorderen Bereich jeweils eine Abwinkelung mit einem im Wesentlichen in Türhoch- und Türlängsrichtung befindlichen Flächenbereich aufweisen, der unmittelbar oder zumindest mittelbar mit dem Türinnenblech der Fahrzeugtür fest oder lösbar verbunden ist. Die Hauptflächenbereiche der oberen und/oder unteren Scharnierverstärkung können außerdem beispielsweise in einem vorderen und/oder hinteren Bereich jeweils eine weitere Abwinkelung mit einem im Wesentlichen in Türhoch- und Türquerrichtung befindlichen Flächenbereich aufweisen, der unmittelbar oder zumindest mittelbar mit dem Türinnenblech der Fahrzeugtür fest oder lösbar verbunden ist. Die obere Scharnierverstärkung und/oder die untere Scharnierverstärkung können jeweils in Fahrzeuglängsrichtung vorne und/oder hinten eine Mehrfachabwinkelung aufweisen mit wenigstens einem etwa in Türhochrichtung und in Türlängsrichtung oder Türquerrichtung befindlichen Flächenbereich. Außerdem kann ein dazu winkelförmig angeordneter anderer etwa in Türhochrichtung und in der anderen Türquerrichtung oder Türlängsrichtung befindlicher Flächenbereich vorgesehen sein. Die Flächenbereiche können beispielsweise jeweils zumindest bereichsweise zumindest mittelbar mit einem benachbarten Wandbereich der Fahrzeugtür verbunden sein. Zusätzlich kann wenigstens eine Mehrfachabwinkelung einen in Türhochrichtung und etwa in Türquerrichtung befindlichen Flächenbereich und einen etwa in Türhoch- und Türlängsrichtung befindlichen Flächenbereich aufweisen. Die Lageangaben zu Flächen in Türlängs- und/- oder Türhoch- und/oder Türquerrichtung sind so verstehen, dass sich diese Flächen genau oder lediglich etwa in diesen Richtungen befinden. Dies trifft auch zu, wenn nicht einheitlich einige Richtungen mit dem Vorsatz "etwa" und andere Richtungen ohne den Vorsatz "etwa" bezeichnet wurden. Die Lageangaben zu Flächen wurden so gewählt, dass sie für übliche Fahrzeugtüren und auch für Flügeltüren zutreffend sind, die beispielsweise in ihrer Offenlage nach oben oder nach hinten oben und eventuell seitlich nach außen angestellt sind. Das Versteifungsteil kann beispielsweise wenigstens zwei aneinander angrenzende, zueinander abgewinkelte Flächenbereiche aufweisen, von denen jeder Flächenbereich beispielsweise mit einem zugeordneten Gegenflächenbereich von wenigstens zwei zueinander abgewinkelten Gegenflächenbereichen des Türinnenblechs der Fahrzeugtür unmittelbar oder mittelbar fest oder lösbar verbunden sein kann. Das Versteifungsteil kann beispielsweise zumindest Z-förmig zueinander abgewinkelte Flächenbereiche aufweisen, von denen beispielsweise jeder Flächenbereich jeweils zumindest bereichsweise unmittelbar mit einem zugeordneten Gegenflächenbereich des Türinnenblechs der Fahrzeugtür fest oder lösbar verbunden sein kann. Beispielsweise kann in einem mit den Scharnieren versehenen Stirnbereich der Fahrzeugtür eine etwa in Türlängsrichtung befindliche Durchtrittsöffnung für ein an der Karosserie des Fahrzeugs angelenktes Türbremselement vorgesehen sein, das durch eine mit der Durchtrittsöffnung zumindest bereichsweise fluchtende Durchgangsöffnung im Versteifungsteil hindurch mit einer an dem Türinnenblech der Fahrzeugtür oder an dem Versteifungsteil befestigten Türbremse zusammen wirkt. Die Türbremse kann beispielsweise in einem zumindest zu der Durchgangsöffnung offenen Türbremsgehäuse angeordnet sein, das an dem Türinnenblech der Fahrzeugtür oder an dem Versteifungsteil befestigt ist. Das Türbremselement kann beispielsweise eine Haltezunge sein, die beim Öffnen und Schließen der Fahrzeugtür selbsttätig gegenüber der Türbremse in der Fahrzeugtür verstellbar ist und durch ein zusammen Wirken mit einer Rasteinrichtung der Türbremse zumindest in einer Winkelstellung der Fahrzeugtür die Fahrzeugtür kraftschlüssig arretiert. Die obere und/oder untere Scharnierverstärkung und/oder das Versteifungsteil können in beliebiger Kombination oder einheitlich jeweils an zumindest einer Stelle punkt-, linien- oder flächenförmig mit dem Türinnenblech der Fahrzeugtür verschweißt und/oder verklebt und/oder vernietet unlösbar und/oder über ein lösbares Verbindungsmittel lösbar verbunden sein. Bei Verwendung einer Türbremse kann eine Türbremsverstärkung verwendet sein, die von dem Ausführungsbeispiel abweichend gestaltet und abgestützt sein kann. Die Fahrzeugtür kann Stahlbauteile und/oder Aluminiumbauteile aufweisen, von denen beispielsweise zumindest zwei Bauteile beispielsweise durch Schweißen und/oder Punktschweißen und/oder Remotelaserschweißen und/oder Laserstrahlschweißen mit oder ohne einen Zusatzwerkstoff und/oder durch Clinchen und/oder Kleben fest und/oder über Verbindungsmittel lösbar verbunden sein können.

## Patentansprüche

1. Scharnier-Verstärkungseinrichtung für eine über ein oberes und ein unteres Scharnier an der Karosserie eines Fahrzeugs schwenkbare Fahrzeugtür (1), mit jeweils einer zumindest mittelbar mit der Innenseite eines Türinnenblechs (5) der Fahrzeugtür (1) verbundenen oberen Scharnierverstärkung (2) und einer unteren Scharnierverstärkung (3), die über ein Versteifungsteil (4) verbunden sind, das zumindest bereichsweise zumindest mittelbar an dem Türinnenblech (5) befestigt ist, wobei die obere Scharnierverstärkung (2) und die untere Scharnierverstärkung (3) und das Versteifungsteil (4) durch jeweils wenigstens ein separat gefertigtes Bauteil gebildet sind, die zumindest nach der Fertigung der Fahrzeugtür (1) fest miteinander verbunden sind, da
durch gekennzeichnet, dass
die obere Scharnierverstärkung (2) und/oder die untere Scharnierverstärkung (3) einen Hauptflächenbereich (6, 7) in Türlängs- und Türquerrichtung sowie eine Abwinkelung (8, 9) mit wenigstens einem etwa in Türlängs- und Türhochrichtung befindlichen vorderen Stützflächenbereich, wobei der vordere Stützflächenbereich zumindest mittelbar mit dem Türinnenblech (5) der Fahrzeugtür (1) fest oder lösbar verbunden ist, und eine weitere Abwinkelung (10, 11) mit wenigstens einem etwa in Türlängs- und Türhochrichtung befindlichen hinteren Stützflächenbereich aufweisen, wobei der hintere Stützflächenbereich zumindest mittelbar mit dem Türinnenblech (5) der Fahrzeugtür (1) fest oder lösbar verbunden ist.

2. Scharnier-Verstärkungseinrichtung nach Anspruch 1, **dadurch gekennzeichnet, dass** die obere Scharnierverstärkung (2) und/oder die untere Scharnierverstärkung (3) jeweils in Türlängsrichtung vorne und/oder hinten eine Mehrfachabwinkelung mit wenigstens einem etwa in Türhochrichtung und in Türlängs- oder Türquerrichtung befindlichen Stützflächenbereich (8 bis 15) und einen dazu winkelförmig angeordneten anderen Stützflächenbereich (8 bis 15) etwa in Türhochrichtung und in Türlängsrichtung aufweist, die jeweils zumindest bereichsweise zumindest mittelbar mit einem benachbarten Wandbereich (5) der Fahrzeugtür (1) verbunden sind.

3. Scharnier-Verstärkungseinrichtung nach Anspruch 2, **dadurch gekennzeichnet, dass** zumindest zwei Stützflächenbereiche (8, 12 bzw. 9, 13 bzw. 10, 14 bzw. 11, 15) aneinander angrenzend miteinander verbunden sind.

4. Scharnier-Verstärkungseinrichtung nach einem der Ansprüche 1 bis 3, **dadurch gekennzeichnet, dass** das Versteifungsteil (4) wenigstens zwei aneinander angrenzende, zueinander abgewinkelte Flächenbereiche (16, 17, 18) aufweist, von denen jeder Flächenbereich (16, 17, 18) mit einem zugeordneten Gegenflächenbereich von wenigstens zwei zueinander abgewinkelten Gegenflächenbereichen des Türinnenblechs (5) der Fahrzeugtür (1) unmittelbar oder mittelbar fest oder lösbar verbunden ist.

5. Scharnier-Verstärkungseinrichtung nach einem der Ansprüche 1 bis 4, **dadurch gekennzeichnet, dass** das Versteifungsteil (4) zumindest Z-förmig zueinander abgewinkelte Flächenbereiche (16, 17, 18) aufweist.

6. Scharnier-Verstärkungseinrichtung nach einem der Ansprüche 1 bis 5, **dadurch gekennzeichnet, dass** in einem mit den Scharnieren versehenen Stirnbereich der Fahrzeugtür (1) eine etwa in Türlängsrichtung ausgebildete Durchtrittsöffnung (19) für ein an der Karosserie des Fahrzeugs angelenktes Türbremselement vorgesehen ist, das durch eine mit der Durchtrittsöffnung (19) zumindest bereichsweise fluchtende Durchgangsöffnung (20) im Versteifungsteil (4) hindurch mit einer an dem Türinnenblech der Fahrzeugtür oder an dem Versteifungsteil (4) befestigten Türbremse zusammen wirkt.

7. Scharnier-Verstärkungseinrichtung nach Anspruch 6, **dadurch gekennzeichnet, dass** die Türbremse in einem zumindest zu der Durchgangsöffnung (20) offenen Türbremsgehäuse angeordnet ist, das an dem Türinnenblech der Fahrzeugtür oder an dem Versteifungsteil (4) befestigt ist.

8. Scharnier-Verstärkungseinrichtung nach Anspruch 6 oder 7, **dadurch gekennzeichnet, dass** das Türbremselement eine Haltezunge ist, die beim Öffnen und Schließen der Fahrzeugtür (1) selbsttätig gegenüber der Türbremse in der Fahrzeugtür (1) verstellbar ist und durch ein zusammen Wirken mit einer Rasteinrichtung der Türbremse zumindest in einer Winkelstellung der Fahrzeugtür (1) die Fahrzeugtür (1) kraftschlüssig arretiert.

9. Scharnier-Verstärkungseinrichtung nach einem der Ansprüche 1 bis 8, **dadurch gekennzeichnet, dass** die obere (2) und/oder untere Scharnierverstärkung (3) und/oder das Versteifungsteil (4) jeweils an zumindest einer Stelle punkt-, linien- oder flächenförmig mit dem Türinnenblech (5) der Fahrzeugtür (1) verschweißt und/oder verklebt und/oder vernietet unlösbar und/oder über ein lösbares Verbindungsmittel lösbar verbunden sind.

## Claims

1. A hinge reinforcement device for a vehicle door (1) pivotable by way of an upper and a lower hinge on the body of a vehicle, comprising in each case an upper hinge reinforcement (2) that is at least indirectly connected to the inner side of an inside door panel (5) of the vehicle door (1) and a lower hinge reinforcement (3), which are connected to one another by means of a stiffening component (4) that is at least in regions and at least indirectly attached to the inside door panel (5), the upper hinge reinforcement (2), the lower hinge reinforcement (3) and the stiffening component (4) each being formed by at least one separately manufactured component, which are firmly connected to one another, at least after the vehicle door (1) is manufactured, **characterised in that**
the upper hinge reinforcement (2) and/or the lower hinge reinforcement (3) have a main surface region (6, 7) in the longitudinal and transverse direction of the door and an angulation (8, 9) with at least one frontal supporting surface region located approximately in the longitudinal and vertical direction of the door, the frontal supporting surface region being at least indirectly firmly or detachably connected to the inside door panel (5) of the vehicle door (1), and a further angulation (10, 11) comprising a rear supporting surface region located approximately in the longitudinal and vertical direction of the door, the rear supporting surface region being at least indirectly firmly or detachably connected to the second inside door panel (5) of the vehicle door (1).

2. A hinge reinforcement device according to Claim 1, **characterised in that** the upper hinge reinforcement (2) and/or the lower hinge reinforcement (3) each have, in the longitudinal direction of the door at the front and/or rear, a multiple angulation with at least one supporting surface region (8 to 15) located approximately in the vertical direction of the door and in the longitudinal or transverse direction of the door, and another supporting surface region (8 to 15) approximately in the vertical and longitudinal direction of the door, which is arranged to form an angle with the first supporting surface region, which are at least in regions and at least indirectly connected with a neighbouring wall region (5) of the vehicle door (1).

3. A hinge reinforcement device according to Claim 2, **characterised in that** at least two supporting surface regions (8, 12 or 9, 13 or 10, 14 or 11, 15) are adjacent and connected to one another.

4. A hinge reinforcement device according to one of Claims 1 to 3, **characterised in that** the stiffening component (4) has at least two surface regions (16,17,18) that are adjacent and are angled relative to one another, each surface region (16, 17, 18) of which is directly or indirectly firmly or detachably connected with an allocated counter surface region of at least two counter surface regions of the inside door panel (5) of the vehicle door (1) angled relative to one another.

5. A hinge reinforcement device according to one of Claims 1 to 4, **characterised in that** the stiffening component (4) has surface regions (16, 17, 18) angled at least in a Z-shape in relation to one another.

6. A hinge reinforcement device according to one of Claims 1 to 5, **characterised in that**, in a front area of the vehicle door (1) equipped with the hinges, there is an access opening (19) for a door braking element hinged to the body of the vehicle which is formed approximately in the longitudinal direction of the door, which door braking element works together with a door brake attached to the inside door panel of the vehicle door or to the stiffening component (4) through a through-opening (20) in the stiffening component (4) that is aligned at least in regions with the access opening (19).

7. A hinge reinforcement device according to Claim 6, **characterised in that** the door brake is arranged in a door-brake case which is open at least to the through-opening (20) and which is attached to the inside door panel of the vehicle door or to the stiffening component (4).

8. A hinge reinforcement device according to Claim 6 or 7, **characterised in that** the door braking element is a retaining tongue, which is automatically adjustable vis-à-vis the door brake in the vehicle door (1) when the vehicle door (1) is opened and closed and, by acting together with an engaging device of the door brake, forcibly locks the vehicle door (1) at least when the vehicle door (1) is in an angular position.

9. A hinge reinforcement device according to one of Claims 1 to 8, **characterised in that** the upper (2) and/or lower hinge reinforcement (3) and/or the stiffening component (4) are each welded and/or glued and/or non-detachably riveted and/or detachably connected via a detachable connecting means to the inside door panel (5) of the vehicle door (1) at at least one point in a spot-, line- or surface-shaped manner.

## Revendications

1. Dispositif de renfort de charnière destiné à une porte de véhicule (1) susceptible de pivoter sur la carrosserie du véhicule par l'intermédiaire d'une charnière supérieure et d'une charnière inférieure, comprenant respectivement un renfort de charnière supérieur (2) et un renfort de charnière inférieur (3) reliés au moins indirectement au côté intérieur d'une tôle interne (5) de la porte du véhicule (1), qui sont reliés par l'intermédiaire d'une pièce de rigidification (4), qui est fixée au moins par zones, au moins indirectement sur la tôle intérieure de porte (5), le renfort de charnière supérieur (2) et le renfort de charnière inférieur (3) ainsi que la pièce de rigidification (4) étant respectivement formés par au moins un élément fabriqué séparément et étant reliés solidairement les uns aux autres au moins après la fabrication de la porte du véhicule (1),
**caractérisé en ce que**
le renfort de charnière supérieur (2) et/ou le renfort de charnière inférieur (3) comporte(nt) une zone de surface principale (6, 7) dans la direction longitudinale et dans la direction transversale de la porte ainsi qu'un coudage (8, 9) ayant au moins une zone de surface d'appui avant située essentiellement dans la direction longitudinale et dans la direction de la hauteur de la porte, la zone de surface d'appui avant étant reliée solidairement ou de façon amovible au moins indirectement à la tôle interne (5) de la porte du véhicule (1) un autre coudage (10, 11) ayant au moins une zone de surface d'appui arrière située essentiellement dans la direction de la longueur et dans la direction de la hauteur de la porte, la zone de surface d'appui arrière étant reliée solidairement ou de façon amovible au moins indirectement à la tôle interne (5) de la porte du véhicule (1).

2. Dispositif de renfort de charnière conforme à la revendication 1, **caractérisé en ce que**
le renfort de charnière supérieur (2) et/ou le renfort de charnière inférieur (3) comporte(nt) respectivement, à l'avant et/ou à l'arrière dans la direction longitudinale de la porte un coudage multiple ayant au moins une zone de surface d'appui (8 à 15) située essentiellement dans la direction de la hauteur de la porte et dans la direction longitudinale ou dans la direction transversale de la porte, et une autre zone de surface d'appui (8 à 15) coudée par rapport à celle-ci située essentiellement dans la direction de la hauteur de la porte et la direction longitudinale de la porte qui sont respectivement reliées au moins par zones, au moins indirectement avec une zone de paroi (5) voisine de la porte du véhicule (1).

3. Dispositif de renfort de charnière conforme à la revendication 2, **caractérisé en ce qu'**
au moins deux zones de surface d'appui (8, 12 ou 9, 13 ou 10, 14 ou 11, 15) voisines sont reliées l'une à l'autre.

4. Dispositif de renfort de charnière conforme à l'une des revendications 1 à 3,
**caractérisé en ce que**
la pièce de rigidification (4) comporte au moins deux zones de surface (16, 17, 18) voisines coudées l'une par rapport à l'autre, dont chacune est reliée solidairement ou de façon amovible, indirectement ou directement à une zone de surface antagoniste associée d'au moins deux zones de surface antagonistes coudée l'une par rapport à l'autre de la tôle interne (5) de la porte du véhicule (1).

5. Dispositif de renfort de charnière conforme à l'une des revendications 1 à 4,
**caractérisé en ce que**
la pièce de rigidification (4) comporte des zones de surface (16, 17, 18) coudées les unes par rapport aux autres au moins en forme de Z.

6. Dispositif de renfort de charnière conforme à l'une des revendications 1 à 5,
**caractérisé en ce que**
dans la zone frontale de la porte du véhicule (1) équipée des charnières, il est prévu une ouverture de passage (19) formée essentiellement dans la direction longitudinale de la porte pour un élément de frein de porte articulé sur la carrosserie du véhicule, qui coopère avec un frein de porte fixé sur la tôle interne de la porte du véhicule ou sur la pièce de rigidification (4) au travers d'une ouverture de passage (20) de la pièce de rigidification (4) alignée au moins par zones avec l'ouverture de passage (19).

7. Dispositif de renfort de charnière conforme à la revendication 6, **caractérisé en ce que**
le frein de porte est installé dans un boîtier de frein de porte ouvert au moins vers l'ouverture de passage (20) qui est fixé sur la tôle interne de la porte du véhicule ou sur la pièce de rigidification (4).

8. Dispositif de renfort de charnière conforme à la revendication 6 ou 7, **caractérisé en ce que**
l'élément de frein de porte est une languette de retenue qui, lors de l'ouverture et de la fermeture de la porte du véhicule (1) peut être automatiquement réglée en face frein de porte situé dans la porte du véhicule (1) et bloque par une liaison par la force la porte (1) du véhicule, en coopérant avec un dispositif d'encliquetage du frein de porte, au moins dans une position angulaire de cette porte (1).

9. Dispositif de renfort de charnière conforme à l'une des revendications 1 à 8,
**caractérisé en ce que**
le renfort de charnière supérieur (2) et/ou le renfort de charnière inférieur (3) et/ou la pièce de rigidification (4) est(sont) respectivement soudé(es) et/ou collé(es) et/ou rivé(es) de façon inamovible et/ou relié(s) de façon amovible par l'intermédiaire d'un moyen de liaison amovible sur au moins un emplacement, par points, linéairement ou sur une surface avec la tôle intérieure (5) de la porte (1).
